# EUROPÄISCHE PATENTSCHRIFT

(11) **EP 3 127 192 B1**
(45) Veröffentlichungstag und Bekanntmachung des Hinweises auf die Patenterteilung: **09.06.2021**
(21) Anmeldenummer: 15720901.6
(22) Anmeldetag: 02.04.2015
(51) Int. Cl.: H01R 13/514, H01R 13/518, H01R 13/66, G06F 13/40

(54) **MODULARER STECKVERBINDER**
MODULAR PLUG CONNECTOR
FICHE MODULAIRE

(30) Priorität: 02.04.2014 DE 102014104629
(43) Veröffentlichungstag der Anmeldung: 08.02.2017
(73) Patentinhaber: Harting Electric GmbH & Co. KG, 32339 Espelkamp (DE)
(72) Erfinder: TRÖGER, Lutz, 49082 Osnabrück (DE); FRIESEN, Markus, 32339 Espelkamp (DE); BRÜX, Markus, 50674 Köln (DE)
(86) Internationale Anmeldenummer: PCT/DE2015/100143
(87) Internationale Veröffentlichungsnummer: WO 2015/149757

(56) Entgegenhaltungen:
- EP-A2- 1 353 412
- DE-C1- 19 707 120
- DE-U1-202007 018 306
- DE-U1-202007 018 307
- US-A- 5 761 052

## Beschreibung

Die Erfindung geht aus von einem modularen Steckverbinder nach dem Oberbegriff des unabhängigen Anspruchs 1.

Derartige modulare Steckverbinder werden benötigt, um Signale und Ströme zwischen Kabeln und/oder Geräten zu übertragen. Dazu werden signal- und stromführende Kabel oder Leitungen an dem modularen Steckverbinder angeschlossen. Der modulare Steckverbinder ist dabei direkt an dem Kabel angeschlossen, oder als sogenanntes Anbaugehäuse an einem Gerät montiert. Im Falle eines als Anbaugehäuse ausgebildeten modularen Steckverbinders werden Leitungen aus dem Gehäuse direkt, ohne Kabel in den modularen Steckverbinder geführt und an diesem kontaktiert.

Zwei derartige modulare Steckverbinder sind zur gegenseitigen Kontaktierung vorgesehen. Dabei ist einerseits eine mechanische Kontaktierung der modularen Steckverbinder miteinander vorgesehen, als auch eine Kontaktierung der signal- und/oder stromführenden Leitungen, mittels Kontaktmitteln die im modularen Steckverbinder aufgenommen sind.

Je nach Ausgestaltung des modularen Steckverbinders können elektrische Kontaktmittel, optische Kontaktmittel, pneumatische Kontaktmittel, induktive Kontaktmittel oder Fluidkontakte im modularen Steckverbinder aufgenommen werden.

Derartige modulare Steckverbinder umfassen ein Steckverbindergehäuse in welchem mehrere, unterschiedliche Steckverbindermodule aufgenommen werden können. Dabei sind die Steckverbindermodule normiert auf eine einheitliche Modulbreite. Steckverbindermodule können in einfacher, doppelter oder vielfacher Modulbreite ausgebildet sein.

Die Steckverbindermodule werden in dem Steckverbindergehäuse aufgenommen und bilden so ein individuelles Steckgesicht des modularen Steckverbinders. Die Aufnahme der Steckverbindermodule in einem Halterahmen ist weit verbreitet. Dieser ermöglicht eine einfache Montage der Steckverbindermodule zu einem einzigen Modulareinsatz. Dieser Modulareinsatz kann dann einstückig in das Steckverbindergehäuse eingesetzt und in diesem fixiert werden.

### Stand der Technik

Die DE 197 07 120 C1 zeigt einen Halterahmen zur Halterung von Steckverbindermodulen und zum Einbau in ein Steckverbindergehäuse bzw. zum anschrauben an Wandflächen, wobei die Steckverbindermodule in den Halterahmen eingesetzt sind und Halterungsmittel an den Steckverbindermodulen mit an gegenüberliegenden Wandteilen (Seitenteilen) des Halterahmens vorgesehenen Ausnehmungen zusammenwirken und die Steckverbindermodule formschlüssig in dem Halterahmen halten. DE202007018307U1 offenbart einen Modularen Steckverbinder nach dem Oberbegriff des Anspruchs 1.

Aus der DE 10 2012 107 902 A1 ist eine Steckereinheit für ein elektrisches Gerät bekannt, insbesondere für ein Gerät mit hoher Stromaufnahme, umfassend mindestens zwei im Betrieb des Geräts stromführende Strompfade, von denen jeder ein Kontaktelement mit einem Steckkontaktkörper sowie einem mit dem Steckkontaktkörper elektrisch leitend verbundenen Leitungsanschluss sowie ein mit dem Leitungsanschluss elektrisch leitend verbundenes Leitungsendstück eines zu dem Gerät führenden Zuleitungskabels umfasst, eine Steckerbrücke mit einem Kontaktträger, an welchem die Kontaktelemente so gehalten sind, dass die Steckkontaktkörper auf einer Seite des Kontaktträgers und die Leitungsanschlüsse auf der anderen Seite des Kontaktträgers liegen, und ein Steckergehäuse, welches die Steckerbrücke, die Kabelanschlüsse und die Leitungsendstücke umschließt, derart zu verbessern, dass eine strombedingte Erwärmung oder Erhitzung der Kontaktelemente möglichst zuverlässig erkannt werden kann, wird vorgeschlagen, dass die Steckereinheit mindestens einen ersten Temperatursensor und mindestens einen zweiten Temperatursensor umfasst, dass der mindestens eine erste Temperatursensor in stärkerem Masse thermisch mit mindestens einem der Strompfade gekoppelt ist als der mindestens eine zweite Temperatursensor und dass der mindestens eine zweite Temperatursensor in stärkerem Masse thermisch mit mindestens einem Referenzbereich des Steckergehäuses gekoppelt ist als der mindestens eine erste Temperatursensor.

Die Druckschrift DE 20 2007 018 306 U1 offenbart eine Messeinrichtung für Steckverbinder, angeordnet in einem Steckverbindergehäuse in dem elektrische Kontakte in dazu vorgesehenen Aufnahmeöffnungen eines Kontakteinsatzes angeordnet sind. Dabei ist einem oder mehreren elektrischen Kontakten im Kontakteinsatz mindestens ein Messsensor mit einer Auswerteeinheit zugeordnet, wobei der Messsensor in unmittelbarer Nähe zum elektrischen Kontakt innerhalb des Steckverbindergehäuses angeordnet ist. Weiterhin wird in diesem Zusammenhang der Einsatz von MID-Technologie (Molded Interconnect Devices) als eine äußerst platzsparende Variante offenbart, um z.B. auf einem nichtleitenden Modulgehäuse die erforderlichen Leiterbahnen mit den elektronischen Bauteilen direkt aufzubringen und zu versiegeln. Insbesondere wird offenbart, die erforderlichen Leiterbahnen für eine Messeinrichtung mit einem elektronischen Sensor und eine eventuell zusätzliche Auswerteeinheit direkt mittels MID-Technik auf die Wand des ersten Modulgehäuses aufzubringen, bzw. darin zu integrieren.

Nachteilig wirkt sich bei den aus dem Stand der Technik bekannten Lösungen aus, dass nur eine Überwachung von physikalischen Parametern einzelner Steckverbinder möglich ist. Die erforderlichen Sensoren müssen jeweils auf den spezifischen Steckverbinder abgestimmt und angepasst werden.

Selbiges gilt für die Elektronik zur Auswertung der Messwerte verbauter Sensoren. Jeder Steckverbinder benötigt eine separate Auswerteschaltung wie aus der DE 10 2012 107 902 A1 bekannt ist.

Sobald eine Messung und Überwachung von physikalischen Größen in einem Steckverbinder erforderlich ist, wird eine speziell auf den Steckverbinder abgestimmte und zugeschnittene Elektronik zur Messung und Auswertung der Messewerte benötigt. Die Anpassung solcher Elektronik ist sehr aufwendig und teuer und nicht universell einsetzbar.

### Aufgabenstellung

Die Aufgabe der Erfindung besteht darin, einen modularen Steckverbinder vorzustellen, der über eine Elektronik zur Messung und Auswertung physikalischer Größen des Steckverbinders verfügt, wobei die Elektronik universell einsetzbar ist und für eine individuelle Zusammenstellung des modularen Steckverbinders nutzbar ist.

Die Aufgabe wird durch die kennzeichnenden Merkmale des unabhängigen Anspruchs 1 gelöst.

Vorteilhafte Ausgestaltungen der Erfindung sind in den Unteransprüchen angegeben.

Bei der Erfindung handelt es sich um einen modularen Steckverbinder, bestehend aus einem Steckverbindergehäuse, einem Halterahmen und zumindest einem Steckverbindermodul.

Das Steckverbindergehäuse kann dabei verschiedene Ausführungsformen aufweisen. Neben einer üblichen Ausbildung als Gehäuse mit einer Kabelaufnahme und einer Steckseite, in welche ein Kontakteinsatz eingesetzt wird, kann es sich um ein sogenanntes Anbaugehäuse handeln, welches zur Montage an einer Gehäusewand vorgesehen ist und keine separate Kabelaufnahme aufweist. Auch Ausführungen als Anbaugehäuse mit zusätzlicher Kabelaufnahme sind denkbar.

In dem Steckverbindergehäuse ist der Halterahmen vorgesehen. Dieser kann einteilig mit dem Steckverbindergehäuse ausgeführt oder mechanisch reversibel im Steckverbindergehäuse befestigt sein.

Der Halterahmen verfügt über zumindest einen Modulsteckplatz, welcher zur Aufnahme von Steckverbindermodulen vorgesehen ist. Je nach Größe des modularen Steckverbinders kann der Halterahmen ein, zwei oder mehr Modulsteckplätze aufweisen. Als zweckmäßig und vorteilhaft haben sich modulare Steckverbinder und damit verbundene Halterahmen mit zwei, vier, sechs oder acht Modulsteckplätzen erwiesen.

Die Steckverbindermodule zur Aufnahme in dem Halterahmen können ebenfalls verschiedene Größen aufweisen. Neben dem Rastmaß eines Modulsteckplatzes sind doppelte oder vielfache Steckverbindermodule zweckmäßig.

Die Steckverbindermodule umfassen ein Modulgehäuse welches ein- oder mehrteilig ausgebildet sein kann. Im Modulgehäuse sind Kontaktmittel vorgesehen, welche zur Kontaktierung und Übertragung von Signalen oder Strömen vorgesehen sind. Dafür werden signal- oder stromführende Leitungen oder Adern an einer Anschlussseite des Steckverbindermoduls mit den Kontaktmitteln verbunden.

An einer Steckseite des Steckverbindermoduls sind die Kontaktmittel zugänglich um mit einem korrespondierenden Steckverbindermodul kontaktiert zu werden.

In der speziellen vorgestellten Ausführungsform können die Steckverbindermodule über Sensoren verfügen, welche es ermöglichen physikalische Werte aufzunehmen. Dabei kann es sich um physikalische Werte der Kontaktmittel wie zum Beispiel Strom, Spannung, Druck, Frequenzen oder Temperatur handeln, aber auch sind Sensoren für Vibration, Taster für Steckzyklen oder jegliche andere Art von Sensoren denkbar.

Erfindungsgemäß verfügt der modulare Steckverbinder über eine Auswertungs-Elektronik welche dafür geeignet ist, die von den Sensoren aufgenommenen Messwerte zu verarbeiten. Dabei ist eine beliebig komplexe Elektronik denkbar, die unterschiedlichste Aufgaben ausführen kann.

Denkbar sind Aufgaben von Messwertverarbeitung, über Identifikation von Steckverbindern und Gegensteckverbindern, Speicherung sowie Aus- und Weitergabe der Konfiguration des modularen Steckverbinders oder auch die Erkennung angeschlossener Sensoren und eingesetzter Steckverbindermodule.

Zur Kommunikation der Auswertungs-Elektronik mit den Sensoren und/oder Steckverbindermodulen ist im modularen Steckverbinder ein Bussystem vorgesehen. Dieses ermöglicht es, eine Vielzahl unterschiedlicher Module und Sensoren mit der Auswertungs-Elektronik zu verbinden. Zudem kann das Bussystem zur Übertragung von Energie und Signalen zwischen Sensoren und der Auswertungs-Elektronik genutzt werden.

Durch eine Erweiterung der Sensoren in den Steckverbindermodulen mit einer Buselektronik, wird der Auswertungs-Elektronik ermöglicht, automatisch die angeschlossenen Steckverbindermodule zu erkennen. Die Auswertungs-Elektronik kann so die physikalische Konfiguration des modularen Steckverbinders elektronisch abbilden. Eine Auswertung und Verarbeitung der Messwerte verschiedener, eingesetzter Steckverbindermodule ist so möglich.

Um einen Datenbus zwischen der Auswertungs-Elektronik und den einzelnen Steckverbindermodulen zu ermöglichen, verfügen die Steckverbindermodule, neben den Kontaktmitteln zur Übertragung von Signalen und Strömen, über zusätzliche elektrische Kontaktmittel. Diese zusätzlichen Kontaktmittel sind an zwei gegenüberliegenden Seitenflächen der Steckverbindermodule vorgesehen. Dabei sind die elektrischen Kontaktmittel der einen Seite mit denen der anderen Seite elektrisch verbunden.

Durch die zusätzlichen Kontaktmittel können nebeneinander angeordnete, im Halterahmen aufgenommene Steckverbindermodule elektrisch untereinander kontaktieren und so eine Datenbusleitung bilden. An die Datenbusleitung, die sich so durch alle eingesetzten Steckverbindermodule erstreckt, können die Sensoren in den Steckverbindermodulen angeschlossen werden.

In einer vorteilhaften Ausführungsform sind die elektrischen Kontaktmittel an der einen Seite des Steckverbindermoduls als Steckkontakte (männliche Kontakte) ausgebildet. Die an der gegenüberliegenden Seite vorgesehenen elektrischen Kontaktmittel hingegen sind als korrespondierende Buchsenkontakte (weibliche Kontakte) ausgebildet. Dadurch ist eine Aneinanderreihung einer Vielzahl von Steckverbindermodulen möglich. Die Datenbusleitung kann so durch beliebig viele Steckverbindermodule durchgeschliffen werden.

In der erfindungsgemäßen Ausführungsform ist die Datenbusleitung nicht durch die Steckverbindermodule bereitgestellt, sondern im Halterahmen aufgenommen. Durch entsprechende Leitungen im Halterahmen können die Steckverbindermodule beim Einsetzten in den Halterahmen mit der Datenbusleitung kontaktieren. Zudem ist möglich, die Auswertungs-Elektronik mit in den Halterahmen zu integrieren.

Eine weitere vorteilhafte Ausführungsform sieht vor, die Auswertungs-Elektronik ebenfalls in einem Steckverbindermodul vorzusehen. Dadurch kann die Auswertungs-Elektronik modular in einen bereits bestehenden modularen Steckverbinder eingesetzt werden. Durch das Zufügen erfindungsgemäßer Steckverbindermodule mit Datenbusleitung kann so ein bereits vorhandener, modularer Steckverbinder mit Steckverbindermodulen mit Sensoren, sowie einer Auswertungs-Elektronik nachgerüstet werden.

Weiter vorteilhaft an der Auswertungs-Elektronik im Rastmaß der Steckverbindermodule ist, dass diese direkt über seitliche elektrische Kontaktmittel an die Datenbusleitung angeschlossen werden kann, die sich durch die Steckverbindermodule erstreckt. Das gesamte System kann so in vorhandene Steckverbindergehäuse mit bekannten Halterahmen integriert werden.

In ein solches "Master"-Modul können zudem weitere Funktionen integriert werden. So ist denkbar in das Modul eine Kommunikationsschnittstelle zu integrieren, um mit der Auswertungs-Elektronik kommunizieren zu können. Diese Schnittstelle kann wahlweise an der Steckseite ausgeführt werden um die Signale über Steckkontakte in ein Steckverbindermodul eines kontaktieren Gegensteckverbinders zu übermitteln. Es ist aber auch eine anschlussseitige Schnittstelle denkbar, über welche die Signale durch ein angeschlossenes Kabel weggeführt werden.

Eine zusätzliche Ausführungsform sieht vor, die Schnittstelle für die Auswertungs-Elektronik per Funk zu realisieren. So kann eine Kommunikation per WLAN, Bluetooth, RFID oder andere Funkstandards ermöglicht werden.

Eine spezielle Ausführungsform der Erfindung sieht vor, die Auswertungs-Elektronik mittels eines bidirektionalen Interface bedienen und auslesen zu können. Dafür kann im Steckverbindergehäuse des modularen Steckverbinders ein bidirektionales Interface integriert werden, damit die Auswertungs-Elektronik von einem Bediener ausgelesen und programmiert werden kann.

Als bidirektionales Interface kann sowohl eine Einheit aus Tastatur und Display oder auch ein Touch-Screen-Display genutzt werden, das die Vorteile einer optischen Anzeige mit den Möglichkeiten einer direkten Eingabe kombiniert.

Optional kann die Auswertungs-Elektronik mit zusätzlichen Schnittstellen ausgestattet werden. So kann beispielsweise zusätzlich Speicher oder eine Schnittstelle für Speicherkarten integriert werden. Eine solche Schnittstelle für beispielsweise SD-Karten (Secure Digital Memory Card) kann genutzt werden, um gesammelte Daten über die Steckverbindermodule, Messwerte und Arbeitszeiten auf ein externes Gerät (z.B. einen Computer oder Tablet-PC) zu übertragen und dort auszuwerten.

Die Datenbusleitung ist in einer bevorzugten Ausführungsform ein I²C Bus. Der I²C Bus besteht aus zwei Busleitungen, sowie zwei Leitungen zur Spannungsversorgung. Diese Anordnung ist um eine weitere, serielle Leitung zwischen den Steckverbindermodulen ergänzt, welche zur Adressierung der Steckverbindermodule benötigt wird.

Bekannte Bus-Systeme sind für den Einsatz auf so kleinem Raum, wie in einem Steckverbinder generell nicht geeignet. Entweder sind die Bus-Systeme sehr groß und können so nicht in Steckverbindermodulen untergebracht werden. Zudem haben derartige Bus-Systeme meist einen sehr hohe Energieaufnahme. Auf Grund der sehr kleinen Baugröße von Steckverbindermodulen können diese Systeme im Steckverbinder nicht verwendet werden.

Andere Bus-Systeme, wie auch der I²C Bus, sind generell nicht geeignet, um eine geografische Anordnung von Slave-Modulen zu erkennen. Für einen I²C-Bus haben die Slave-Module im Normalfall eine eindeutige ID oder müssen beim Verbinden des Bus-Systems mit einer ID versehen werden. Ein solch großer Aufwand wäre bei Zusammenstellung eines modularen Steckverbinders nicht wirtschaftlich. Zudem müsste die Zusammenstellung und Konfiguration durch eine Fachkraft erfolgen, welche im Bereich der Elektroinstallation meist nicht vor Ort ist.

Daher sieht die vorliegende Erfindung vor, alle Slave-Module ohne eindeutige ID auszuliefern. Durch die zusätzliche serielle Leitung zwischen den Steckverbindermodulen kann so beim Start des Systems jedem Modul eine eindeutige ID zugewiesen werden. Viel mehr kann nicht nur jedes Steckverbindermodul einzeln angesprochen werden, sondern auch die geografische Reihenfolge der Module ermittelt und in der ID abgespeichert werden.

Zur ID-Vergabe der Steckverbindermodule werden diese mit einer leeren ID ausgeliefert. In einem ersten Schritt wird der modulare Steckverbinder konfiguriert, indem verschiedene Module, sogenannte Slave-Module, nebeneinander in den Steckverbinder eingesetzt und elektrisch verbunden werden. Das erste der Slave-Module kontaktiert zudem die Auswertungs-Elektronik, welche sich ebenfalls in einem Modul befinden kann.

Bei der Initialisierung gibt sich die Auswertungs-Elektronik selber eine ID = 0. Diese ID = 0 wird über die zusätzliche serielle Leitung an das erste Slave-Modul gesendet. Dieses liest ID des Master-Modules (1) und erhöht diese um 1 auf 1. Die diese neue ID = 1 speichert das erste Slave-Modul als eigene ID ab und gibt diese zudem an das nächste Slave-Modul weiter. Das zweite Slave-Modul handelt identisch, erhöht die ID auf 2, speichert die eigene ID = 2 und sendet diese an das nächste Modul.

Die Konfiguration kann auf verschiedene Weisen abgeschlossen werden. In einer ersten Ausführungsform wartet die Auswertungs-Elektronik des Master-Moduls eine bestimmte Zeit, nach weicher es die Konfiguration der Slave-Module als abgeschlossen ansieht. Eine bevorzugte weitere Ausführungsform sieht vor, über eine sogenannte Interrupt-Leitung die vollständige Konfiguration erkennen zu lassen.

Dazu kann eine der Bus-Leitungen verwendet werden. Durch das Master-Modul wird an diese eine Spannung angelegt und gleichzeitig gemessen. Alle angeschlossenen Slave-Module haben die Interrupt-Leitung im Ausgangszustand gegen Erdung geschaltet, so dass das Master-Modul keine Spannung registrieren kann. Im Laufe der ID-Vergabe trennt jedes Slave-Modul, welchem eine ID zugewiesen ist die Interrupt-Leitung. Wenn alle Slave-Module eine ID zugewiesen bekommen haben und die Interrupt-Leitung getrennt haben, kann so das Master-Modul eine Spannung registrieren und dadurch auf vollständige Initialisierung der Slave-Module schließen.

Auf diese Weise wird jedem Slave-Modul eine eindeutige ID zugewiesen. Zudem kann durch die IDs der Slave-Module auf die physikalische Reihenfolge geschlossen werden und somit von der Auswertungs-Elektronik im Master-Modul auf die Konfiguration des modularen Steckverbinders geschlossen werden. Entsprechend der Zusammenstellung der Slave-Module im Steckverbinder kann die Auswertungs-Elektronik entsprechende Berechnungs- und/oder Auswertungs-Algorithmen aus einer Datenbank abfragen und laden, die auf die Slave-Module und deren Sensoren abgestimmt sind.

### Ausführungsbeispiel

Ein Ausführungsbeispiel der Erfindung ist in den Zeichnungen dargestellt und wird im Folgenden näher erläutert. Es zeigen:
- Fig. 1: Steckverbindermodul in schematischer Darstellung;
- Fig. 2: vier kontaktierte Steckverbindermodule in schematischer Darstellung;
- Fig. 3: weiter drei Steckverbindermodule in schematischer Darstellung;
- Fig. 4: einen Halterahmen eines modularen Steckverbinders mit Steckverbindermodul;
- Fig. 5: einen modularen Steckverbinder; und
- Fig. 6: ein Steckverbindergehäuse.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

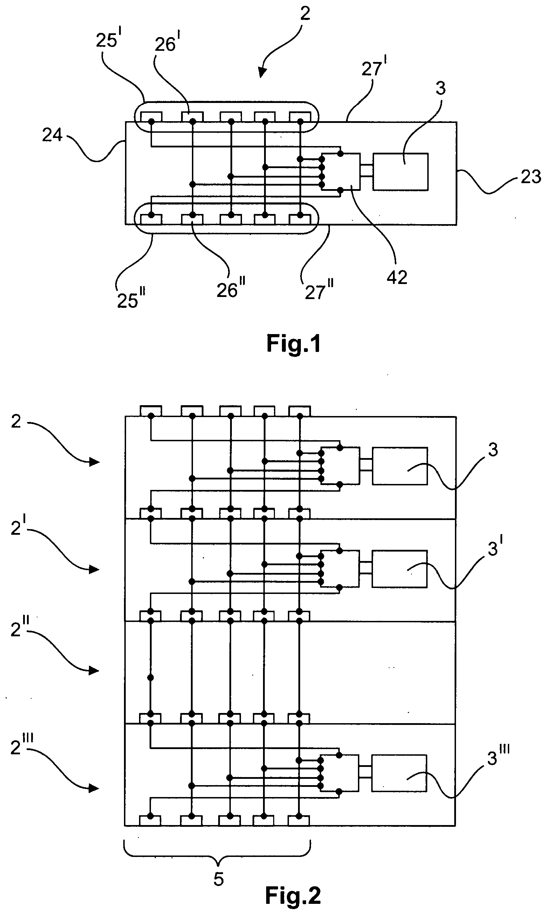

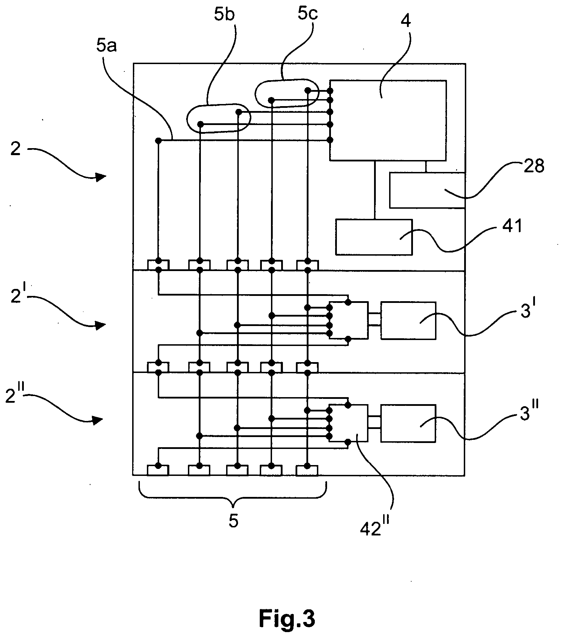

Die Figur 1 zeigt ein Steckverbindermodul 2 in einer vereinfachten, schematischenDarstellung. Auf aus dem Stand der Technik bekannte Elemente des Steckverbindermoduls 2 wie Kontakte und Haltemittel 22 wurde der Übersicht halber in der Figur 1, sowie auch den Figuren 2 und 3 verzichtet.

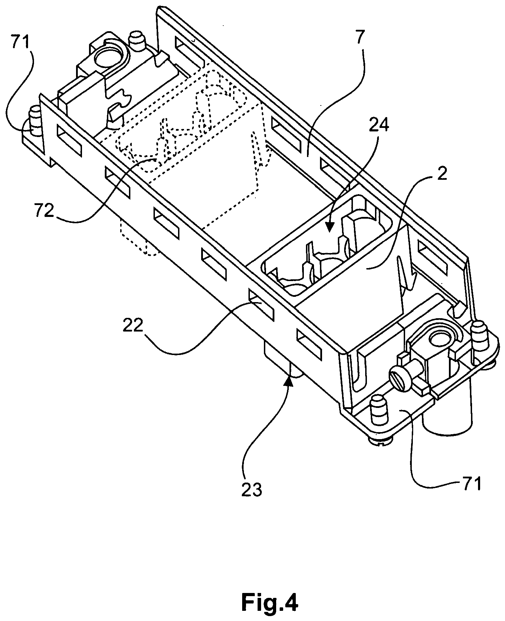

Das Steckverbindermodul 2 weist eine Kontaktseite 23 und eine Anschlussseite 24 auf und ist zur Aufnahme in einem Halterahmen 7 vorgesehen, wie in Figur 4 gezeigt ist. Zur Aufnahme in dem Halterahmen 7 verfügt das Steckverbindermodul 2 über Haltemittel 22, welche in Ausnehmungen in den Halterahmen 7 eingreifen.

Je nach Größe des modularen Steckverbinders können Halterahmen 7 mit verschiedenen Anzahlen von Modulsteckplätzen 72 aufgeführt sein. In der gezeigten Ausführung sind sechs Modulsteckplätze 72 zur Aufnahme von Steckverbindermodulen 2 vorgesehen. Für die Ausführung des Halterahmens 7 sowie der Haltemittel 22 gibt es verschiedene, aus dem Stand der Technik bekannte Lösungen. Die vorliegende Erfindung kann auf all diese Lösungen angewendet werden und ist nicht auf das gezeigte Ausführungsbeispiel beschränkt.

Zudem sind an dem Halterahmen 7 Befestigungsmittel 71 vorgesehen, um den Halterahmen 7 in einem Steckverbindergehäuse 1 zu befestigen und fixieren.

Das in Figur 1 dargestellte Steckverbindermodul 2 weist, neben den aus dem Stand der Technik bekannten Elementen, erfindungsgemäß einen Sensor 3 auf. Der Sensor 3 ist zur Messung physikalischer Messgrößen im Steckverbindermodul 2 vorgesehen. Dabei kann es sich, je nach Art und Kontakten des Steckverbindermoduls, um verschiedene Arten von Sensoren 3 handeln.

Zweckmäßige Sensoren-Typen (nicht abschließend) sind: Temperatursensor zur Überwachung von Überhitzen, Stromsensor zur Überwachung der Ströme, Vibrationssensor zur Überwachung von Vibrationen z.B. bei Züge, Drucksensor zur Überwachung von Drücken in Pneumatik-Modulen oder ein Lichtsensor zur Überwachung von Lichtwellen-Modulen. Die Liste kann beliebig um zusätzliche Arten von Sensoren erweitert werden.

Im Steckverbindermodul 2 ist der Sensor 3 über elektrische Leitungen mit elektrischen Kontaktmitteln 26 verbunden. Zweckmäßig kann dem Sensor 3 noch ein Elektronik-Bauteil 42 zugeordnet sein. Dieses Elektronik-Bauteil 42 kann zur Umwandlung der Sensordaten und zur Identifikation des Steckverbindermoduls 2 genutzt werden. Alle elektrischen Kontaktmittel 26 zusammen bilden einen elektrischen Anschluss 25 am Steckverbindermodul 2.

Die elektrischen Kontaktmittel 26 sind dabei zweckmäßig an Seitenflächen 27 des Steckverbindermoduls 2 vorgesehen. Erfindungsgemäß ist der Sensor 3 nicht nur mit einem elektrischen Anschluss 25 verbunden, sondern mit einem ersten elektrischen Anschluss 25' und einem zweiten elektrischen Anschluss 25". Jeder der elektrischen Anschlüsse 25', 25" ist dabei auf einer der Seitenflächen 27', 27" des Steckverbindermoduls 2 vorgesehen. Diese Anordnung erlaubt es, den Anschluss der Sensoren 3 durch das Steckverbindermodul 2 zuführen. So kann der Sensor 3 des Steckverbindermoduls 2 über den elektrischen Anschluss 25' kontaktiert werden und gleichzeitig kann über den elektrischen Anschluss 25" ein weiteres Steckverbindermodul 2' mit dessen Sensor 3' am Steckverbindermodul 2 kontaktiert werden.

Die Kontaktierung mehrerer Steckverbindermodule 2, 2', 2", 2'" nebeneinander ist in der Figur 2 dargestellt. Dabei sind die gezeigten vier Steckverbindermodule nebeneinander angeordnet, wie sie auch im Halterahmen 7 angeordnet wären. Die Seitenflächen 27' der Steckverbindermodule 2, 2', 2", 2'" sind dabei jeweils einer Seitenfläche 27" eines weiteren Steckverbindermoduls 2, 2', 2", 2'" zugeordnet.

Die elektrischen Anschlüsse 25' der Steckverbindermodule 2, 2', 2", 2'" kontaktieren so die elektrischen Anschlüsse 25" der nebengeordneten Steckverbindermodule 2, 2', 2", 2'". Dazu sind die elektrischen Kontaktmittel 26' der elektrischen Anschlüsse 25' vorzugsweise als Stiftkontakte ausgebildet und die elektrischen Kontaktmittel 26" der elektrischen Anschlüsse 25" als Buchsenkontakte.

So ist eine Kontaktierung der Steckverbindermodule 2, 2', 2", 2'" untereinander möglich, wodurch eine Datenbusleitung 5 durch die Steckverbindermodule 2, 2', 2", 2"' gebildet wird. Über die Datenbusleitung 5 sind so alle Sensoren 3, 3', 3'" der Steckverbindermodule 2, 2', 2", 2'" miteinander elektrisch verbunden.

Auch ist ein Durchschleifen der Datenbusleitung 5 durch ein Steckverbindermodul 2" ohne Sensor 3 möglich, wie in der Figur 2 dargestellt.

Die Figur 3 zeigt drei weitere Steckverbindermodule 2, 2', 2" welche wie bereits in Figur 2 gezeigt nebeneinander angeordnet und miteinander elektrische kontaktiert sind. Dabei sind nur die Steckverbindermodule 2', 2" mit Sensoren 3', 3" ausgestattet.

Das Steckverbindermodul 2 ist als Haupt- oder Mastermodul ausgebildet und verfügt über eine Auswertungs-Elektronik 4. Die Auswertungs-Elektronik 4 ist dafür vorgesehen, die Messdaten der Sensoren 3 auszuwerten und zu verarbeiten. Dazu ist die Datenbusleitung 5 mit der Auswertungs-Elektronik 4 verbunden.

Die Datenbusleitung 5 kann je nach Ausführung und Art des verwendeten Bus-Systems verschiedene einzelne Leitung aufweisen. In den gezeigten Ausführungsbeispielen der Figuren 1, 2 und 3 sind fünf einzelne Leitungen in der Datenbusleitung 5 vorgesehen. Dabei ist die Leitung 5a eine seriell durch alle Steckverbindermodule 2 verlaufende Leitung, die zur Identifikation der Steckverbindermodule 2 dient. Die Energieleitungen 5b dienen zur Stromversorgung der Sensoren 3 und Elektronik-Bauteile 42. Die Datenleitungen 5c sind zur Kommunikation zwischen Auswertungs-Elektronik 4 und Elektronik-Bauteile 42 vorgesehen.

In dem in der Fig.3 gezeigten Ausführungsbeispiel verfügt das Steckverbindermodul 2 über weitere Bauteile. Dabei ist ein Speichermedium 41 vorgesehen. Dieses kann zur Speicherung von Messwerten oder Einstellungen der Auswertungs-Elektronik 4 genutzt werden. Auch ist denkbar, das Speichermedium 41 über einen Steckplatz mit der Auswertungs-Elektronik 4 zu verbinden.

Zudem ist eine Schnittstelle 28 vorgesehen, über welche mit der Auswertungs-Elektronik 4 kommuniziert werden kann. Dabei kann die Schnittstelle 28 beispielsweise als LAN-Schnittstelle, Serielle-Schnittstelle, WLAN-Schnittstellte oder Bluetooth-Schnittstelle ausgeführt sein. Auch andere Schnittstellen-Arten sind denkbar.

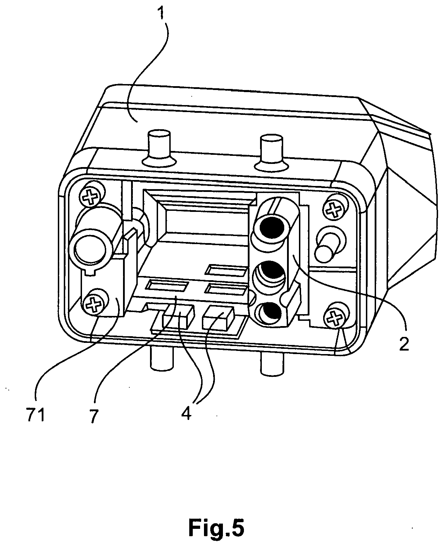

Die Figur 5 zeigt einen erfindungsgemäßen, modularen Steckverbinder mit Blick auf die Steckseite. Gezeigt ist ein Steckverbindergehäuse 1 mit einem darin aufgenommenen Halterahmen 7. Der Halterahmen 7 ist über die Befestigungsmittel 71 im Steckverbindergehäuse 1 gehalten. Mittels Schrauben sind die Befestigungsmittel 71 in der Steckverbindergehäuse 1 geschraubt.

Der gezeigte Halterahmen 7 ist ausgeführt mit drei Modulsteckplätzen 72, wobei nur ein Steckverbindermodul 2 in dem Halterahmen 7 aufgenommen ist. In dieser Ausführungsform ist die Auswertungs-Elektronik 4 im Steckverbindergehäuse 1 vorgesehen und an dessen Innenseite angebracht. Die Belegung eines Modulsteckplatzes 72 durch ein Master-Steckverbindermodul 2, wie aus Figur 3 bekannt, ist so nicht nötig. Alle Modulsteckplätze 72 können für Steckverbindermodule 2 und zur Übertragung von Strömen und/oder Signalen genutzt werden.

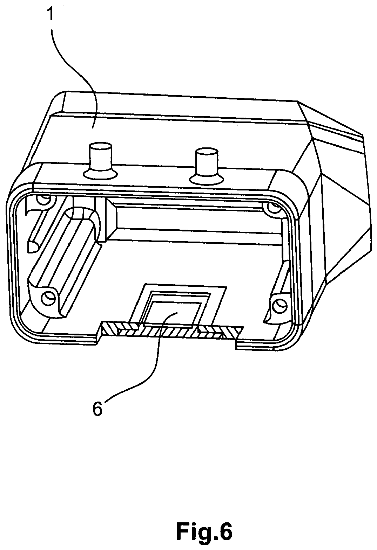

In der Figur 6 ist eine weitere Ausführungsform des Steckverbindergehäuses 2 dargestellt. Der Übersichtlichkeit halber, wurde auf die Darstellung von Halterahmen 7 und Steckverbindermodulen 2 verzichtet. In dieser speziellen Ausführungsform verfügt das Steckverbindergehäuse 2 über ein bidirektionales Interface 6, welches in eine Seitenwand des Steckverbindergehäuses 2 eingelassen ist. Der untere Bereich des bidirektionalen Interface 6 sowie der Seitenwand des Steckverbindergehäuses 2 sind zur Veranschaulichung im Teilschnitt dargestellt.

Das bidirektionale Interface 6 kann zweckmäßig durch ein Touch-Screen-Display zur Verfügung gestellt werden, welches mit der Auswertungs-Elektronik verbunden ist. Das bidirektionale Interface 6 ermöglicht so eine individuelle Abfrage von Messwerten, sowie Bedienung und Programmierung der Auswertungs-Elektronik.

Alternativ zu einem Touch-Screen-Display kann als bidirektionales Interface 6 auch ein einfaches Display oder eine Anzeige in das Steckverbindergehäuse 1 integriert werden und durch ein Eingabegerät (z.B. Tasten oder Tastatur) ergänzt werden.

### Bezugszeichenliste

- 1: Steckverbindergehäuse
- 2: Steckverbindermodul
- 3: Sensor
- 4: Auswertungs-Elektronik
- 5: Datenbusleitung
- 6: bidirektionales Interface
- 7: Halterahmen
- 71: Befestigungsmittel
- 72: Modulsteckplatz
- 22: Haltemittel
- 23: Kontaktseite
- 24: Anschlussseite
- 25: elektrischer Anschluss
- 26: elektrische Kontaktmittel
- 27: Seitenfläche
- 28: Schnittstelle
- 42: Elektronik-Bauteil

## Patentansprüche

1. Modularer Steckverbinder, bestehend aus einem Steckverbindergehäuse (1), einem Halterahmen (7), ein Bussystem und zumindest einem Steckverbindermodul (2),
wobei der Halterahmen (7) zumindest einen Modulsteckplatz (72) aufweist, in dem das mindestens eine Steckverbindermodul (2) angeordnet ist
wobei in dem Steckverbindermodul (2) eine Auswertungs-Elektronik (4) und zumindest ein Sensor (3) vorgesehen ist,
wobei in der Auswertungs-Elektronik (4) eine Steuerelektronik für ein Bussystem integriert und über das Bussystem mit dem zumindest einen Sensor (3) elektrisch verbunden ist,
wobei das zumindest eine Steckverbindermodul (2) über eine elektronische Adressierung verfügt, die zur Kommunikation über ein Bussystem geeignet ist, und
wobei das zumindest eine Steckverbindermodul (2) über zumindest einen elektrischen Anschluss (25) für ein Bussystem verfügt,
**dadurch gekennzeichnet, dass**
das Bussystem in den Halterahmen (7) integriert ist, wobei das Bussystem um eine einzelne, seriell durch die Steckverbindermodule (2) verlaufende Leitung (5a) erweitert ist.

2. Modularer Steckverbinder nach Anspruch 1,
**dadurch gekennzeichnet, dass**
der Halterahmen (7) mechanisch, reversibel in dem Steckverbindergehäuse (1) fixiert ist.

3. Modularer Steckverbinder nach Anspruch 1,
**dadurch gekennzeichnet, dass**
der Halterahmen (7) einteilig mit dem Steckverbindergehäuse (1) ausgeführt ist.

4. Modularer Steckverbinder nach einem der vorstehenden Ansprüche,
**dadurch gekennzeichnet, dass**
die Auswertungs-Elektronik (4) automatisch an das Bussystem angeschlossene Steckverbindermodule (2) erkennt und Sensorwerte des zumindest einem, in dem zumindest einem Steckverbindermodul (2) angeordneten Sensors (3) auslesen kann.

5. Modularer Steckverbinder nach einem der vorstehenden Ansprüche,
**dadurch gekennzeichnet, dass**
es sich bei dem Bussystem um ein I²C Bus-System, bestehend aus zwei Datenleitungen (5c) und zwei Energieleitungen (5b) handelt.

## Claims

1. Modular plug connector comprising a plug connector housing (1), a retaining frame (7), a bus system and at least one plug connector module (2),
wherein the retaining frame (7) comprises at least one module plug-in site (72) in which the at least one plug connector module (2) is arranged,
wherein an electronic evaluating unit (4) and at least one sensor (3) are provided in the plug connector module (2),
wherein an electronic control unit for a bus system is integrated into the electronic evaluating unit (4) and is connected in an electrical manner by way of the bus system to the at least one sensor (3),
wherein the at least one plug connector module (2) comprises an electronic addressing system that is suitable for communication by way of a bus system, and wherein the at least one plug connector module (2) comprises at least one electrical connection (25) for a bus system,
**characterized in that**
the bus system is integrated into the retaining frame (7), wherein the bus system is expanded by an individual line (5a) that extends in series through the plug connector modules (2).

2. Modular plug connector according to Claim 1,
**characterized in that**
the retaining frame (7) is fixed in a mechanically reversible manner in the plug connector housing (1).

3. Modular plug connector according to Claim 1,
**characterized in that**
the retaining frame (7) is embodied as one part with the plug connector housing (1).

4. Modular plug connector according to any one of the preceding claims,
**characterized in that**
the electronic evaluating unit (4) automatically recognizes plug connector modules (2) that are connected to the bus system and can select sensor values of the at least one sensor (3) that is arranged in the at least one plug connector module (2).

5. Modular plug connector according to any one of the preceding claims,
**characterized in that**
the bus system is an I²C bus system comprising two data lines (5c) and two energy lines (5b).

## Revendications

1. Connecteur enfichable modulaire, composé d'un boîtier de connecteur enfichable (1), d'un cadre de retenue (7), d'un système de bus et d'au moins un module de connecteur enfichable (2),
le cadre de retenue (7) présentant au moins un emplacement d'enfichage de module (72) dans lequel est disposé ledit au moins un module de connecteur enfichable (2),
une électronique d'évaluation (4) et au moins un capteur (3) étant prévus dans le module de connecteur enfichable (2),
une électronique de commande pour un système de bus étant intégrée dans l'électronique d'évaluation (4) et reliée électriquement audit au moins un capteur (3) par l'intermédiaire du système de bus,
ledit au moins un module de connecteur enfichable (2) disposant d'un adressage électronique qui est adapté pour communiquer par l'intermédiaire d'un système de bus, et
ledit au moins un module de connecteur enfichable (2) disposant d'au moins une borne électrique (25) pour un système de bus,
**caractérisé en ce que** le système de bus est intégré dans le cadre de retenue (7), le système de bus étant étendu par une ligne unique (5a) s'étendant en série à travers les modules de connecteur enfichable (2).

2. Connecteur enfichable modulaire selon la revendication 1, **caractérisé en ce que** le cadre de retenue (7) est fixé mécaniquement et de manière réversible dans le boîtier de connecteur enfichable (1) .

3. Connecteur enfichable modulaire selon la revendication 1, **caractérisé en ce que** le cadre de retenue (7) est réalisé d'un seul tenant avec le boîtier de connecteur enfichable (1).

4. Connecteur enfichable modulaire selon l'une quelconque des revendications précédentes, **caractérisé en ce que** l'électronique d'évaluation (4) reconnaît automatiquement des modules de connecteur enfichable (2) connectés au système de bus et peut lire des valeurs de capteur dudit au moins un capteur (3) disposé dans ledit au moins un module de connecteur enfichable (2).

5. Connecteur enfichable modulaire selon l'une quelconque des revendications précédentes, **caractérisé en ce que** le système de bus est un système de bus I²C composé de deux lignes de données (5c) et de deux lignes électriques (5b).
